# EUROPÄISCHE PATENTSCHRIFT

(11) **EP 2 639 354 B1**
(45) Veröffentlichungstag und Bekanntmachung des Hinweises auf die Patenterteilung: **26.12.2018**
(21) Anmeldenummer: 13157476.6
(22) Anmeldetag: 01.03.2013
(51) Int. Cl.: E01H 4/02, B62D 55/06

(54) **Pistenraupe zur Schneeflächenbearbeitung**
Tracked piste preparation vehicle for snow surface processing
Dameur de pistes pour le traitement des surfaces enneigées

(30) Priorität: 13.03.2012 DE 102012203905
(43) Veröffentlichungstag der Anmeldung: 18.09.2013
(73) Patentinhaber: Kässbohrer Geländefahrzeug AG, 88471 Laupheim (DE)
(72) Erfinder: Kuhn, Michael, 88480 Achstetten (DE); Junginger, Bernd, 89134 Blaustein-Bermaringen (DE)
(74) Vertreter: Patentanwälte Ruff, Wilhelm, Beier, Dauster & Partner mbB

(56) Entgegenhaltungen:
- EP-A1- 1 908 672
- EP-A1- 1 995 159
- WO-A1-2009/144291
- DE-A1- 2 640 128
- DE-U1-202009 001 764
- JP-U- H0 371 994
- PISTENBULLY COM: "PistenBully 600 Fire in red - state-of-the-art technology combined with red-hot design", INTERNET CITATION, Februar 2006 (2006-02), XP002421334, Gefunden im Internet: URL:http://www.katvpb.com/600.html [gefunden am 2007-02-01]

## Beschreibung

Die Erfindung betrifft eine Pistenraupe zur Schneeflächenbearbeitung nach Oberbegriff des Anspruchs 1.

Eine derartige Pistenraupe ist durch die Anmelderin allgemein bekannt, vgl. auch EP 1 995 159 A1. Die bekannte Pistenraupe weist ein Kettenlaufwerk mit zwei Laufwerksseiten auf, bei denen jeweils vier Laufräder in einer gemeinsamen Ebene angeordnet sind. Ein fünftes, vorderstes Laufrad ist als verstellbares Spannrad ausgeführt. Ein hinterstes Rad jeder Laufwerksseite ist als Triebrad ausgeführt, über das eine entsprechende Antriebskraft in die zugehörige Kettenanordnung eingeleitet wird. Die beiden Triebräder der beiden Laufwerksseiten sind gegenüber der Ebene der Laufräder nach oben hochgesetzt.

Aus der EP 1 908 672 B1 ist eine weitere Pistenraupe bekannt, bei der alle Räder jeder Laufwerksseite, d.h. sowohl alle Laufräder als auch das jeweilige Triebrad, in einer gemeinsamen Ebene angeordnet sind.
Aufgabe der Erfindung ist es, eine Pistenraupe der eingangs genannten Art zu schaffen, die eine gute Schneeflächenbearbeitung mit großer Arbeitsbreite ermöglicht.

Diese Aufgabe wird durch die Merkmale des Anspruchs 1 gelöst. Dabei wirkt auf jede Laufwerksseite eine maximale Zugkraft von mehr als 60 kN. Durch die hohen Zugkräfte, die auf die Kettenanordnungen wirken, können eine heckseitige Bearbeitungseinheit, vorzugsweise in Form einer Heckfräsenanordnung, und vorzugsweise ein Räumschild, mit großer Arbeitsbreite eingesetzt werden. Durch die erfindungsgemäße Lösung ist es möglich, einen Räumschild und eine Heckfräsenanordnung mit Arbeitsbreiten von mehr als 6000 mm, vorzugsweise 7000 mm oder mehr, zu betreiben. Die jeweilige Zugkraft, die auf die Kettenanordnung jeder Laufwerksseite wirkt, entspricht der Hälfte der Gesamtzugkraft und wird über das jeweilige Triebrad, das auch als Turasrad bezeichnet wird, auf die Kettenanordnung übertragen. Die hochgesetzten Triebräder ermöglichen eine große Laufruhe während des Fahrbetriebes der Pistenraupe, so dass sich eine besonders gute Schneeflächenbearbeitung auf Ski- und Snowboardpisten in Skigebieten errgibt.
In Ausgestaltung der Erfindung ist ein Abstand von in Fahrzeuglängsrichtung gesehenen Mittellängsachsen der Kettenanordnungen größer als 3050 mm, vorzugsweise größer als 3500 mm. Diese Ausgestaltung geht von der Erkenntnis aus, das resultierende Kräfte, die vom befahrenen Untergrund auf die Kettenanordnungen wirken, mittig im Bereich jeder Kettenanordnung angreifen. Der große Abstand der Mittellängsachsen der Kettenanordnung ermöglicht eine große Gesamtbreite der Pistenraupe - über die Kettenanordnungen gesehen -, die wiederum eine große Bearbeitungsbreite einer Heckfräsenanordnung ermöglicht.
In weiterer Ausgestaltung der Erfindung ist ein zentraler Antriebsmotor mit einer Leistung von mindestens 375 kW, vorzugsweise von mehr als 390 kW, vorgesehen. In vorteilhafter Weise ist als zentraler Antriebsmotor ein Dieselmotor vorgesehen, der eine Fahrzeughydraulik antreibt. Die Fahrzeughydraulik weist mehrere Antriebsstränge auf, von denen zwei zu den Triebrädern des Kettenlaufwerks führen. Ein weiterer Antriebsstrang dient zur Beaufschlagung der heckseitigen Bearbeitungseinheit. Weitere Antriebsstränge können für den frontseitigen Räumschild, für eine auf der Pistenraupe positionierte Windenanordnung oder für andere Hydraulikeinheiten vorgesehen sein.

Nach der Erfindung umfasst die heckseitige Bearbeitungseinheit eine Heckfräsenanordnung, die eine Fräskasteneinheit aufweist, deren Breite - quer zur Bearbeitungsrichtung gesehen - größer ist als 5300 mm. Die Fräskasteneinheit kann ein- oder mehrteilig gestaltet sein und zur Aufnahme von einer oder mehrerer Fräswellen vorgesehen sein. Durch die große Bearbeitungsbreite der Heckfräsenanordnung ist es möglich, auch breite Ski- oder Snowboardpisten mit wenigen Fahrzyklen zu bearbeiten und zu präparieren.
In weiterer Ausgestaltung der Erfindung weist die Pistenraupe mit Räumschild und heckseitiger Bearbeitungseinheit ein Gesamtgewicht im Bereich von 10 000 bis 11 000 kg, vorzugsweise im Bereich zwischen 10 000 und 10 500 kg, auf. Dadurch ist trotz großer Bearbeitungsbreite ein vergleichsweise geringer Kraftstoffverbrauch gewährleistet. Zudem ermöglicht das vergleichsweise geringe Fahrzeuggewicht einen relativ geringen Flächendruck relativ zu dem zu bearbeitenden Untergrund, so dass ein tiefes Einsinken der Pistenraupe vermieden werden kann.

Die der Erfindung zugrundeliegende Aufgabe wird auch dadurch gelöst, dass ein Verhältnis zwischen einer Kettenaufstandslänge, die als Abstand zwischen den Achsen des vordersten und des letzten auf dem Untergrund abgestützten Laufrades jeder Laufwerksseite definiert ist, und dem Abstand der Mittellängsachsen der gegenüberliegenden Kettenanordnungen zwischen 0,9 und 1,1, vorzugsweise kleiner als 1, ist. Hierdurch ist eine gute Steuer- und Lenkfähigkeit der Pistenraupe gegeben. Überraschenderweise wurde festgestellt, dass insbesondere bei einem entsprechenden Steuer- oder Lenkverhältnis, wie es erfindungsgemäß beschrieben ist, von kleiner als 1 eine besonders gute Wendigkeit und Steuerfähigkeit der Pistenraupe erzielbar ist.

Die der Erfindung zugrundeliegende Aufgabe wird auch dadurch gelöst, dass eine Spurbreite des Kettenlaufwerks kleiner ist als der Abstand der Mittellängsachsen der Kettenanordnungen, wobei die Spurbreite der Abstand der Lauf- oder Triebräder der gegenüberliegenden Laufwerksseiten zueinander ist. Durch die erfindungsgemäße Lösung ergibt sich eine asymmetrische Kettenstützung, d.h. eine asymmetrische Stützung der Kettenanordnungen im Bereich der Lauf- und Triebräder. Dadurch, dass die Spurbreite der Räder geringer ist als der Abstand der Mitten der Kettenanordnungen zueinander, ist es möglich, für die Pistenraupe ohne Kettenanordnungen eine relativ geringe Transportbreite zu erzielen. Trotz der asymmetrischen Stützung und Führung der Kettenanordnungen ist eine einwandfreie Kraftübertragung der Zugkräfte auf den Untergrund gewährleistet.

In Ausgestaltung der Erfindung ist eine Spurbreite der Radachsen der Laufräder größer als 2700 mm. Dadurch ist auch bei großer Arbeitsbreite der Pistenraupe eine gute Steuerbarkeit der Pistenraupe gewährleistet.

In weiterer Ausgestaltung der Erfindung umfasst jede Kettenanordnung eine Vielzahl von Kettenstegen, die über mehr als sechs, vorzugsweise neun, parallel zueinander verlaufende Kettenbänder miteinander verbunden sind. Dadurch lassen sich besonders große Kettenbreiten für jede Kettenanordnung erzielen, die eine große Bearbeitungsbreite der Pistenraupe ermöglichen.

In vorteilhafter Weise ist eine Gesamtbreite jeder Kettenanordnung größer als 2100 mm. Dadurch ist trotz großer Bearbeitungsbreite ein geringer Flächendruck auf den befahrenen Untergrund gewährleistet. Zudem ist es möglich, die Kettenanordnungen im Bereich der Fahrzeugmitte der Pistenraupe relativ nahe nebeneinander zu führen, so dass auch bei Geradeausfahrt der Pistenraupe über nahezu die gesamte Fahrzeugbreite die Kettenanordnungen den Schnee- und Eisuntergrund bearbeiten können.

In weiterer Ausgestaltung der Erfindung weist das Kettenlaufwerk eine veränderbare Kettenaufstandslänge auf. Vorzugsweise ist hierzu das - in Fahrtrichtung gesehen - vorderste Laufrad jeder Laufwerksseite als verstellbares Spannrad ausgebildet. Dadurch ist es möglich, je nach Verstellung des Spannrades auch dieses für eine wirksame Kettenaufstandslänge zu verwenden. Durch die veränderbare Kettenaufstandslänge können je nach Schneeverhältnis und je nach Einsatzzweck das Steuerverhalten der Pistenraupe und damit insbesondere die Wendigkeit und die Laufruhe der Pistenraupe verändert werden.

In weiterer Ausgestaltung der Erfindung ist das Triebrad jeder Laufwerksseite höhenverstellbar angeordnet. Hierdurch kann - je nach Einsatzzweck - auch das Triebrad aus seiner hochgesetzten Stellung abgesenkt werden, um eine weitere Verlängerung der Kettenaufstandslänge zu ermöglichen und hierdurch das Fahrverhalten der Pistenraupe zu beeinflussen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform einer erfindungsgemäßen Pistenraupe,
- Fig. 2: in schematischer, vergrößerter Darstellung ein Kettenlaufwerk einer Pistenraupe ähnlich Fig. 1 und
- Fig. 3: eine Draufsicht auf die Pistenraupe nach Fig. 1.

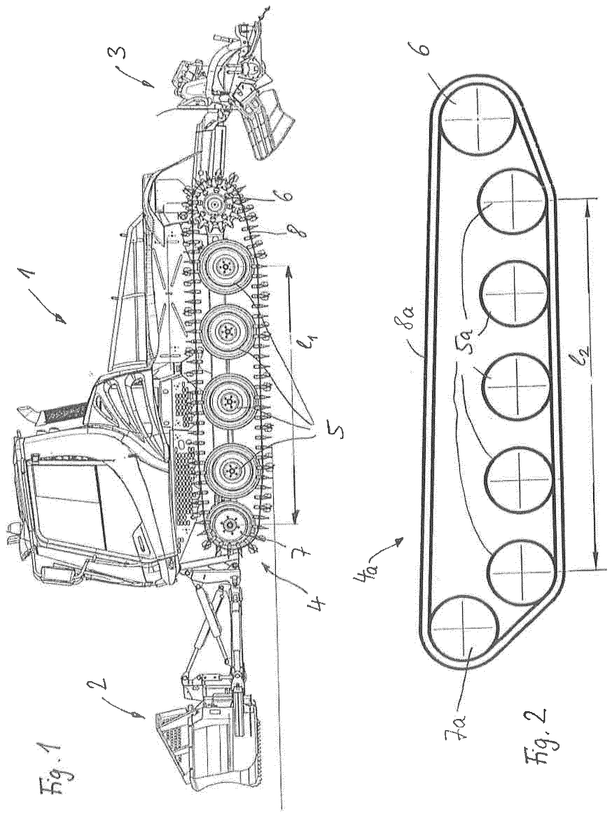

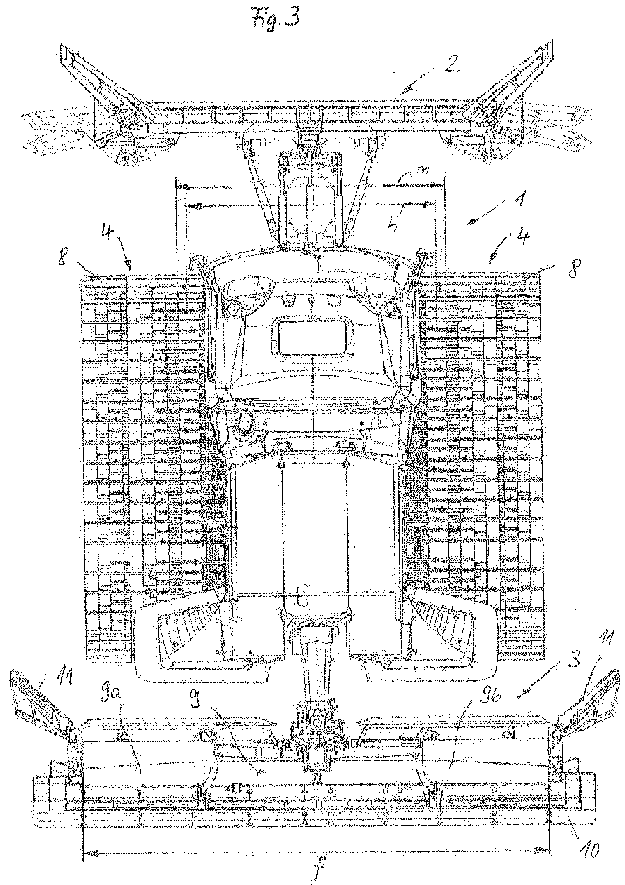

Eine Pistenraupe 1 nach den Fig. 1 und 3 weist ein Fahrzeugchassis auf, auf dem frontseitig ein Fahrerhaus aufgebaut ist. Das Fahrzeugchassis ist mit einem Kettenlaufwerk 4 versehen, das durch zwei Laufwerksseiten gebildet ist, die identisch zueinander für die linke und die rechte Laufwerksseite ausgeführt sind. Frontseitig ist die Pistenraupe 1 mit einem Räumschild 2 versehen, das einen Mittelteil und zwei verstellbare Seitenteile umfasst. Heckseitig ist an der Pistenraupe 1 über einen hydraulisch verstellbaren Heckgeräteträger eine Heckfräsenanordnung 3 angebaut, die nachfolgend näher beschrieben wird.

Das Kettenlaufwerk 4 weist auf jeder Laufwerksseite vier nicht angetriebene Laufräder 5 auf, die in einer gemeinsamen Ebene gelagert sind, eine gemeinsame Spur aufweisen und nicht angetrieben sind. Als vorderstes Laufrad ist ein Spannrad 7 vorgesehen, das ebenfalls die gleiche Spur besitzt wie die Laufräder 5 und in seiner Höhe relativ zum Fahrzeugchassis verstellbar gelagert ist. Das Spannrad 7 weist einen kleineren Durchmesser auf als die Laufräder 5 und ist im Wesentlichen zwischen einer in Fig. 1 dargestellten unteren Stellung und einer in Fig. 2 schematisch dargestellten oberen Stellung verstellbar. Jede Laufwerksseite weist zudem als hinterstes Rad ein Triebrad 6 auf, das auch als Turasrad bezeichnet wird. Das Triebrad 6 ist gegenüber der Ebene der Laufräder 5 hochgesetzt, wie anhand der Fig. 1 sowie anhand der schematischen Darstellung nach Fig. 2 erkennbar ist. Um die beschriebenen Räder ist eine umlaufende Kettenanordnung 8 gelegt, die über Spurbügel relativ zu den Rädern geführt ist. Jede Kettenanordnung 8 ist durch eine Vielzahl von in Fahrzeugquerrichtung erstreckten und parallel zueinander beabstandeten Kettenstegen gebildet, die über mehrere in Fahrzeuglängsrichtung parallel nebeneinander verlaufende, ebenfalls umlaufende Kettenbänder miteinander verbunden sind. Beim dargestellten Ausführungsbeispiel sind insgesamt neun Kettenbänder vorgesehen. Die Kettenstege jeder Kettenanordnung 8 sind alternierend nach innen oder nach außen versetzt angeordnet. Sechs Kettenbänder bilden einen Mittelbereich der Kettenanordnung 8, an dem alle Kettenstege befestigt sind. Zwei außenliegende Kettenbänder sind mit den nach außen versetzten Kettenstegen verbunden. Ein relativ zur Fahrzeugmitte innenliegendes Kettenband ist mit den nach innen versetzten Kettenstegen verbunden.

Jede Kettenanordnung 8 bildet eine in Fahrzeuglängsrichtung erstreckte Mittellängsachse. Die gegenüberliegenden Kettenanordnungen 8 weisen somit zwei zueinander parallele Mittellängsachsen auf, die einen Abstand m zueinander besitzen (Fig. 3). Die beiden Kettenanordnungen 8 sind mittels ihrer Spurbügel nicht längs ihrer Mittellängsachsen, sondern nach innen zur Fahrzeugmitte hin versetzt über die Räder jeder Laufwerksseite geführt, so dass sich für die Räder der Laufwerksseiten des Kettenlaufwerkes 4 eine Spurbreite b ergibt, die kleiner ist als der Abstand m der Mittellängsachsen der Kettenanordnungen 8 (Fig. 3).

Beim dargestellten Ausführungsbeispiel weist die Pistenraupe 1 eine Spurbreite b von ca. 2850 mm und einen Abstand m der Mittellängsachsen der Kettenanordnungen 8 von etwa 3060 mm auf. Das Fahrerhaus als breitester Teil des Fahrzeugchassis weist eine Breite von etwa 2500 mm auf. Eine Arbeitsbreite des Räumschildes 2 variiert zwischen etwa 5600 mm im eingeschwenkten Zustand der Seitenteile und etwa 6500 mm im ausgeschwenkten Zustand der Seitenteile.

Jede Kettenanordnung 8 weist beim dargestellten Ausführungsbeispiel eine in Fahrzeugquerrichtung gesehene Kettenbreite von etwa 2150 mm auf.

Die Heckfräsenanordnung 3 weist eine Fräskasteneinheit 9 auf, die durch einen in der Draufsicht linken Fräskastenteil 9a und einen in der Draufsicht rechten Fräskastenteil 9b gebildet wird. In jedem Fräskastenteil 9a, 9b ist jeweils eine angetriebene Fräswelle drehbar gelagert, die vorzugsweise gemeinsam hydraulisch angetrieben werden. Die Fräskasteneinheit 9 weist - in Fahrzeugquerrichtung gesehen - eine Breite f auf, die beim dargestellten Ausführungsbeispiel etwas mehr als 5300 mm beträgt. An die Fräskasteneinheit 9 schließt eine Finishereinheit 10 an, die zur heckseitigen Glättung des bearbeiteten Untergrundes dient. Die in Fahrzeugquerrichtung gesehene Breite der Finishereinheit 10 beträgt beim dargestellten Ausführungsbeispiel etwa 6400 mm. Zusätzlich sind der Heckfräsenanordnung 3 auf gegenüberliegenden Seiten zwei Seitenfinisher 11 zugeordnet, die die gesamte Bearbeitungsbreite der Heckfräsenanordnung 3 auf fast 7000 mm erhöhen.

Wie anhand der Fig. 1 und 2 erkennbar ist, weist das Kettenlaufwerk 4 für beide Laufwerksseiten eine variable Kettenaufstandslänge l₁, l₂ auf. Dabei ist in Fig. 2 ein modifiziertes Kettenlaufwerk 4a vorgesehen, das gegenüber der Ausführungsform nach Fig. 1 statt vier Laufrädern fünf Laufräder 5a aufweist, die in einer gemeinsamen Ebene angeordnet sind. Als vorderes Laufrad ist ein Spannrad 7a vorgesehen, das in gleicher Weise höhenverstellbar angeordnet ist wie das Laufrad 7 des Kettenlaufwerks 4 nach Fig. 1. Auch das Kettenlaufwerk 4a ist mit einem gegenüber der Ebene der Laufräder 5a hochgesetzten Triebrad 6 versehen. Die Kettenanordnung 8a ist lediglich schematisch dargestellt. Auch die Kettenanordnung 8a ist aus einer Vielzahl von in Fahrzeuglängsrichtung zueinander beabstandet und in Fahrzeugquerrichtung erstreckten Kettenstegen aufgebaut, die über mehrere in Fahrzeuglängsrichtung parallel nebeneinander verlaufende Kettenbänder miteinander verbunden sind. Die Kettenstege können alternierend nach außen oder nach innen versetzt zueinander angeordnet oder auch fluchtend zueinander ausgerichtet sein. Die Kraftübertragung des Triebrades 6 auf die Kettenanordnung 8a erfolgt in gleicher Weise über am Außenumfang des Triebrades 6 abragende Zähne oder Nocken, wie dies bei dem Turasrad 6 nach Fig. 1 der Fall ist. Die beiden Kettenlaufwerke 4 und 4a nach den Fig. 1 und 2 unterscheiden sich somit im Wesentlichen dadurch, dass bei dem Kettenlaufwerk 4a nach Fig. 2 statt vier fünf Laufräder 5a vorgesehen sind.

Wenn das Spannrad 7, 7a in eine obere Endlage verstellt ist, wird eine Kettenaufstandslänge des Kettenlaufwerks 4 durch die vier bzw. fünf Laufräder 5, 5a definiert. Eine Kettenaufstandslänge l₂ definiert sich dann durch den Abstand der Radachsen des vordersten und des hintersten Laufrades 5, 5a zueinander. Sobald das Spannrad 7, 7a in seine untere Endstellung gemäß Fig. 1 verfahren ist, wird eine Kettenaufstandslänge l₁ durch den Abstand der Radachse des vorderen Spannrades 7 zum hintersten Laufrad 5 definiert. Da die Pistenraupe 1 normalerweise auf Schneeuntergrund fährt, taucht die Kettenanordnung 8 auch im Bereich des Spannrades 7, das in seiner unteren Endstellung gegenüber den Laufrädern 5 weiterhin geringfügig nach oben versetzt angeordnet bleibt, in den Schneeuntergrund ein, so dass die wirksame Kettenaufstandslänge bei abgesenktem Spannrad von der Spannradachse 7 bis zur hintersten Laufradachse gemäß l₁ definiert ist.

Bei der Pistenraupe 1 nach Fig. 1 beträgt die Kettenaufstandslänge l₁ bei in seine untere Endstellung verfahrenem Spannrad 7 etwa 3200 mm, bei in seine obere Endstellung gemäß Fig. 2 verfahrenem Spannrad 7 hingegen ist die wirksame Kettenaufstandslänge l₂ etwa 3000 mm.

Unterhalb sowie teilweise hinter dem Fahrerhaus der Pistenraupe 1 ist als zentraler Antriebsmotor ein Dieselmotor verborgen, der eine Leistung von mehr als 375 kW, vorliegend von mehr als 390 kW, aufweist. Die Antriebskraft des Dieselmotors wird über ein Getriebe an eine Hydraulikpumpe einer Fahrzeughydraulik übertragen. Über geeignete Hydrauliksteuerungen und hydraulische Antriebsstränge werden Hydromotoren angetrieben, die den beiden Triebrädern 6 des Kettenlaufwerks 4 zugeordnet sind. Über diese Triebräder 6 werden maximale Zugkräfte von mehr als 60 kN in jede Laufwerksseite eingeleitet, so dass sich für das Kettenlaufwerk 4 eine maximale Gesamtzugkraft von mehr als 120 kN ergibt.

Für die Pistenraupe 1 ergeben sich aufgrund der beschriebenen Fahrwerksgeometrien unterschiedliche Steuerverhältnisse, die maßgeblich für die Lenkwilligkeit der Pistenraupe 1 sind. Wenn die vorderen Spannräder 7, 7a in ihre obere Endstellung verfahren sind, ergibt sich als Quotient aus Kettenaufstandslänge l₂ zum Abstand m der Mittellängsachsen der Kettenanordnungen 8 zueinander ein Steuerverhältnis von kleiner 1, bei in seine untere Endstellung verstelltem Spannrad 7 und einer wirksamen Kettenaufstandslänge l₁ ein Steuerverhältnis von etwa 1,05.

Bei einem nicht dargestellten Ausführungsbeispiel einer erfindungsgemäßen Pistenraupe ist zusätzlich zu einer Verstellbarkeit der vorderen Spannräder auch das hintere Triebrad höhenverstellbar zwischen der anhand der Fig. 1 und 2 beschriebenen hochgesetzten Position und einer zumindest weitgehend mit der Ebene der Laufräder fluchtenden unteren Position. Bei diesem Ausführungsbeispiel kann somit auch das jeweilige Triebrad dazu eingesetzt werden, die wirksame Kettenaufstandslänge zu verändern.

## Patentansprüche

1. Pistenraupe (1) zur Schneeflächenbearbeitung mit einer heckseitigen Schneeflächenbearbeitungseinheit (3) und vorzugsweise mit einem frontseitigen Räumschild (2), sowie mit einem Kettenlaufwerk (4, 4a), das eine linke und eine rechte Laufwerksseite umfasst, wobei beide Laufwerksseiten wenigstens drei in einer gemeinsamen Ebene angeordnete Laufräder (5, 5a) sowie ein gegenüber der Ebene der Laufräder (5, 5a) hochgesetztes Triebrad (6) umfassen, um die jeweils eine Kettenanordnung (8, 8a) umläuft, **dadurch gekennzeichnet, dass** eine über die Triebräder (6) auf das Kettenlaufwerk (4, 4a) wirkende maximale Gesamtzugkraft von mehr als 120 kN vorgesehen ist, und dass die heckseitige Schneeflächenbearbeitungseinheit eine Heckfräsenanordnung (3) umfasst, die eine Fräskasteneinheit (9) aufweist, deren Breite - quer zur Bearbeitungsrichtung gesehen - größer ist als 5300 mm.

2. Pistenraupe nach Anspruch 1, **dadurch gekennzeichnet, dass** die Pistenraupe (1) mit Räumschild (2) und heckseitiger Schneeflächenbearbeitungseinheit (3) ein Gesamtgewicht im Bereich von 10 000 bis 11 000 kg, vorzugsweise im Bereich zwischen 10 000 und 10 500 kg, aufweist.

3. Pistenraupe nach einem der vorhergehenden Ansprüche, **dadurch gekennzeichnet, dass** ein Verhältnis zwischen einer Kettenaufstandslänge (l₁, l₂), die als Abstand zwischen den Achsen des vordersten und des letzten auf dem Untergrund abgestützten Laufrades (5, 5a; 7, 7a) jeder Laufwerksseite definiert ist, und dem Abstand (m) der Mittellängsachsen der gegenüberliegenden Kettenanordnungen (8) zwischen 0,9 und 1,1, vorzugsweise kleiner als 1, ist.

4. Pistenraupe nach einem der vorhergehenden Ansprüche, **dadurch gekennzeichnet, dass** jede Kettenanordnung (8) eine Vielzahl von Kettenstegen umfasst, die über mehr als sechs, vorzugsweise neun, parallel zueinander verlaufende Kettenbänder miteinander verbunden sind.

5. Pistenraupe nach einem der vorhergehenden Ansprüche, **dadurch gekennzeichnet, dass** eine Gesamtbreite jeder Kettenanordnung (8) größer als 2100 mm ist.

6. Pistenraupe nach einem der vorhergehenden Ansprüche, **dadurch gekennzeichnet, dass** das Kettenlaufwerk (4, 4a) eine veränderbare Kettenaufstandslänge (l₁, l₂) aufweist.

7. Pistenraupe nach Anspruch 6, **dadurch gekennzeichnet, dass** das - in Fahrtrichtung gesehen - vorderste Laufrad jeder Laufwerksseite als verstellbares Spannrad (7, 7a) ausgebildet ist.

8. Pistenraupe nach Anspruch 6 oder 7, **dadurch gekennzeichnet, dass** das Triebrad jeder Laufwerksseite höhenverstellbar angeordnet ist.

## Claims

1. Tracked piste vehicle (1) for snow surface treatment having a rear-sided snow surface treatment unit (3) and preferably a front-sided clearing blade (2) and a chain crawler drive (4, 4a) comprising a left drive side and a right drive side, wherein the two drive sides comprise at least three running wheels (5, 5a) arranged in a common plane and a driving wheel (6) raised in relation to the plane of the running wheels (5, 5a), with a respective crawler chain arrangement (8, 8a) revolving around them,
**characterized in that**
a maximum total traction force of more than 120 kN acting on the chain crawler drive (4, 4a) via the driving wheels (6) is provided, and **in that** the rear-sided snow surface treatment unit comprises a rear tiller arrangement (3) including a tiller box unit (9), with the width thereof - as seen transversely to the treatment direction - is greater than 5300 mm.

2. Tracked piste vehicle according to claim 1, **characterized in that** the tracked piste vehicle (1) with clearing blade (2) and rear-sided snow surface treatment unit (3) has a total weight in the range of 10000 to 11000 kg, preferably in the range between 10000 and 10500 kg.

3. Tracked piste vehicle according to any of the preceding claims, **characterized in that** a ratio of a crawler contact length (l₁, l₂), which is defined as distance between the axles of the forefront and the last of the running wheels (5, 5a; 7, 7a) supported on the ground of each drive side, to the distance (m) of the central longitudinal axes of the opposite crawler chain arrangements (8) is between 0.9 and 1.1, preferably less than 1.

4. Tracked piste vehicle according to any of the preceding claims, **characterized in that** each crawler chain arrangement (8) comprises a plurality of chain grousers which are interconnected across more than six, preferably nine, chain belts extending in parallel to each other.

5. Tracked piste vehicle according to any of the preceding claims, **characterized in that** a total width of each crawler chain arrangement (8) is more than 2100 mm.

6. Tracked piste vehicle according to any of the preceding claims, **characterized in that** the chain crawler drive (4, 4a) has a variable crawler contact length (l₁, l₂).

7. Tracked piste vehicle according to claim 6, **characterized in that** the forefront running wheel - as seen in the advancement direction - of each drive side is configured as an adjustable tension wheel (7, 7a).

8. Tracked piste vehicle according to claim 6 or 7, **characterized in that** the driving wheel of each drive side is adjustable in height.

## Revendications

1. Dameuse chenillée (1) pour le traitement des surfaces enneigées avec une unité de traitement des surfaces enneigées (3) sur le côté arrière et de préférence avec une lame racleuse (2) sur le côté frontal ainsi qu'avec un train de roulement à chenille (4, 4a) comportant un côté de train de roulement gauche et un côté de train de roulement droit, les deux côtés de train de roulement comportant au moins trois roues de roulement (5, 5a) disposées dans un plan commun ainsi qu'une roue d'entraînement (6) élevée par rapport au plan des roues de roulement (5, 5a), un arrangement de chenille (8, 8a) tournant autour de chacune, **caractérisée en ce qu'**une force de traction totale maximale agissant sur le train de roulement à chenille (4, 4a) par le biais des roues d'entraînement (6) de plus de 120 kN est prévue, et **en ce que** l'unité de traitement des surfaces enneigées sur le côté arrière comporte un arrangement de fraise arrière (3) présentant une unité de boîte de fraise (9), la largeur de laquelle est plus de 5300 mm, vu transversalement par rapport à la direction de traitement.

2. Dameuse chenillée selon la revendication 1, **caractérisée en ce que** la dameuse chenillée (1) avec lame racleuse (2) et unité de traitement des surfaces enneigées (3) sur le côté arrière présente un poids total dans la plage de 10000 à 11000 kg, de préférence dans la plage entre 10000 et 10500 kg.

3. Dameuse chenillée selon l'une quelconque des revendications précédentes, **caractérisée en ce qu'**un rapport d'une longueur de contact de chenille (l₁, l₂), qui est définie par la distance entre les axes de la roue de roulement plus devant et la roue de roulement plus arrière (5, 5a ; 7, 7a) prenant appui sur le sol de chaque côté de train de roulement, à la distance (m) des axes longitudinaux centraux des arrangements de chenille (8) opposés est situé entre 0,9 et 1,1, de préférence est moins de 1.

4. Dameuse chenillée selon l'une quelconque des revendications précédentes, **caractérisée en ce que** chaque arrangement de chenille (8) comporte une pluralité de crampons de chenille, lesquels sont interconnectés par plus de six, de préférence neuf, bandes de chenille s'étendant en parallèle l'une à l'autre.

5. Dameuse chenillée selon l'une quelconque des revendications précédentes, **caractérisée en ce qu'**une largeur totale de chaque arrangement de chenille (8) est supérieure à 2100 mm.

6. Dameuse chenillée selon l'une quelconque des revendications précédentes, **caractérisée en ce que** le train de roulement à chenille (4, 4a) présente une longueur de contact de chenille (l₁, l₂) variable.

7. Dameuse chenillée selon la revendication 6, **caractérisée en ce que** - vu dans la direction d'avancement - la roue de roulement plus devant de chaque côté de train de roulement est agencée sous forme de roue de tension (7, 7a) ajustable.

8. Dameuse chenillée selon la revendication 6 ou 7, **caractérisée en ce que** la roue d'entraînement de chaque côté de train de roulement est agencée pour être ajustée en hauteur.
